# EUROPÄISCHE PATENTSCHRIFT

(11) **EP 1 149 722 B1**
(45) Veröffentlichungstag und Bekanntmachung des Hinweises auf die Patenterteilung: **12.10.2005**
(21) Anmeldenummer: 01105226.3
(22) Anmeldetag: 03.03.2001
(51) Int. Cl.: B60K 15/035

(54) **Entlüftungseinrichtung für einen Kraftstoffbehälter**
Venting device for a fuel tank
Dispositif de ventilation pour un réservoir de carburant

(30) Priorität: 26.04.2000 DE 10020296
(43) Veröffentlichungstag der Anmeldung: 31.10.2001
(73) Patentinhaber: SIEMENS AKTIENGESELLSCHAFT, 80333 München (DE)
(72) Erfinder: Essing, Martin, 46399 Bocholt (DE)

(56) Entgegenhaltungen:
- EP-A- 0 754 630
- DE-A- 3 037 827
- DE-A- 4 329 876
- FR-A- 2 756 518
- FR-A- 2 774 951
- US-A- 5 431 144

## Beschreibung

Die Erfindung betrifft eine Entlüftungseinrichtung für einen Kraftstoffbehälter mit einer im Kraftstoffbehälter anzuordnenden Ausgleichsöffnung für einen Druckausgleich des Kraftstoffbehälters mit der Umgebung und mit einem vor der Ausgleichsöffnung angeordneten Schwallschutzelement.

Solche Entlüftungseinrichtungen verbinden den nicht mit Kraftstoff ausgefüllten Bereich des Kraftstoffbehälters in der Regel über einen Aktivkohlefilter mit der Umgebung und sind aus der Praxis bekannt. Die Entlüftungseinrichtung ermöglicht damit ein Nachströmen von Luft aus der Umgebung in den Kraftstoffbehälter beim Verbrauch des Kraftstoffs und ein Entweichen von Gasen aus dem Kraftstoffbehälter bei einer Wärmeausdehnung des Kraftstoffs. Aus der Praxis bekannte Entlüftungseinrichtungen haben ein Schwimmerventil oder eine Rückschwallklappe als Schwallschutzelement. Dieses Schwallschutzelement verhindert bei einem Schwappen des Kraftstoffs innerhalb des Kraftstoffbehälters ein Eindringen von Kraftstoff durch die Entlüftungsöffnung in die Entlüftungsleitung. Hierdurch wird ein Eindringen von Kraftstoff in den Aktivkohlefilter und damit dessen Beschädigung verhindert.

Nachteilig bei den bekannten Schwallschutzelementen ist, dass sie bewegliche Bauteile aufweisen und daher sehr störanfällig sind. Weiterhin benötigen die Schwallschutzelemente eine sehr kostenintensive Lagerung oder Führung für das bewegliche Bauteil und aufwendig gestaltete Dichtflächen.

Aus der gattungsbildenden FR 2 756 518 ist weiterhin eine Entlüftungseinrichtung bekannt, in der ein poröser Verschluss innerhalb des Leitungsstutzens angeordnet ist. Die geringe Oberfläche des Verschlusses führt zu einer Behinderung des Gasaustausches infolge Drosselung. Des Weiteren kann bereits eine geringe Menge Schmutz den Verschluss verstopfen.

Der Erfindung liegt das Problem zugrunde, eine Entlüftungseinrichtung der eingangs genannten Art so zu gestalten, dass sie besonders störunanfällig aufgebaut ist und kostengünstig zu fertigen ist.

Dieses Problem wird erfindungsgemäß dadurch gelöst, dass das Schwallschutzelement als feststehendes Bauteil mit einer Vielzahl von einzelnen, im Verhältnis zu der Ausgleichsöffnung jeweils einen kleinen Durchmesser aufweisende Kanälen gestaltet ist, und dass das Schwallschutzelement eine die Ausgleichsöffnung aufweisende Entlüftungsleitung im Bereich der Ausgleichsöffnung teilweise umschließt.

Der Vorteil besteht darin, dass sich die Befestigung des Schwallschutzelementes vor der Ausgleichsöffnung besonders einfach gestaltet. Durch diese Gestaltung erfolgt der Druckausgleich des Kraftstoffbehälters mit der Umgebung über die Kanäle. Wegen ihres geringen Durchmessers setzen die Kanäle einer Gasströmung einen wesentlich geringeren Widerstand entgegen als einer Flüssigkeitsströmung. Hierdurch wird bei einem Schwappen des Kraftstoffs in dem Kraftstoffbehälter ein Eindringen von Kraftstoff durch das Schwallschutzelement in die Entlüftungsleitung verhindert und dennoch ein ausreichender Druckausgleich ermöglicht. Da die Entlüftungseinrichtung im Bereich des Schwallschutzelementes keine beweglichen Bauteile benötigt, ist sie besonders störunanfällig aufgebaut und lässt sich kostengünstig fertigen.

Das Schwallschutzelement könnte beispielsweise mehrere hintereinander angeordnete Gitter mit einer vorgesehenen Maschenweite aufweisen. Gegen das Schwallschutzelement schwappender Kraftstoff wird jedoch gemäß einer vorteilhaften Weiterbildung der Erfindung zuverlässig zurückgehalten, wenn das Schwallschutzelement als poröses Sinterteil gestaltet ist.

Das Schwallschutzelement gestaltet sich gemäß einer anderen vorteilhaften Weiterbildung der Erfindung besonders kostengünstig, wenn es aus Kunststoff gefertigt ist. Ein Sinterverfahren für Kunststoff ist beispielsweise von der Fertigung von Schwimmern für Kraftstoffbehälter bekannt. Hierbei wird zunächst ein Kunststoffgranulat im Extruierverfahren hergestellt und das Kunststoffgranulat anschließend warm verpresst. Über die Korngröße des Kunststoffgranulats und die Temperatur und den Druck während des Sinterverfahrens lassen sich die Durchmesser von zwischen den Granulatkörnern entstehenden Kanälen einstellen.

Die Montage des Schwallschutzelementes gestaltet sich gemäß einer anderen vorteilhaften Weiterbildung der Erfindung besonders einfach, wenn das Schwallschutzelement mit dem die Ausgleichsöffnung aufweisenden Bauteil verschweißt, verklipst oder verpresst ist.

Die Erfindung lässt zahlreiche Ausführungsformen zu. Zur weiteren Verdeutlichung ihres Grundprinzips ist eine davon in der Zeichnung dargestellt und wird nachfolgend beschrieben.
Diese zeigt in
- Figur 1: eine schematische Darstellung eines Kraftstoffbehälters im Längsschnitt mit einer erfindungsgemäßen Entlüftungseinrichtung,
- Figur 2: eine stark vergrößerte Darstellung eines Schwallschutzelementes der erfindungsgemäßen Entlüftungseinrichtung aus Figur 1 im Längsschnitt.

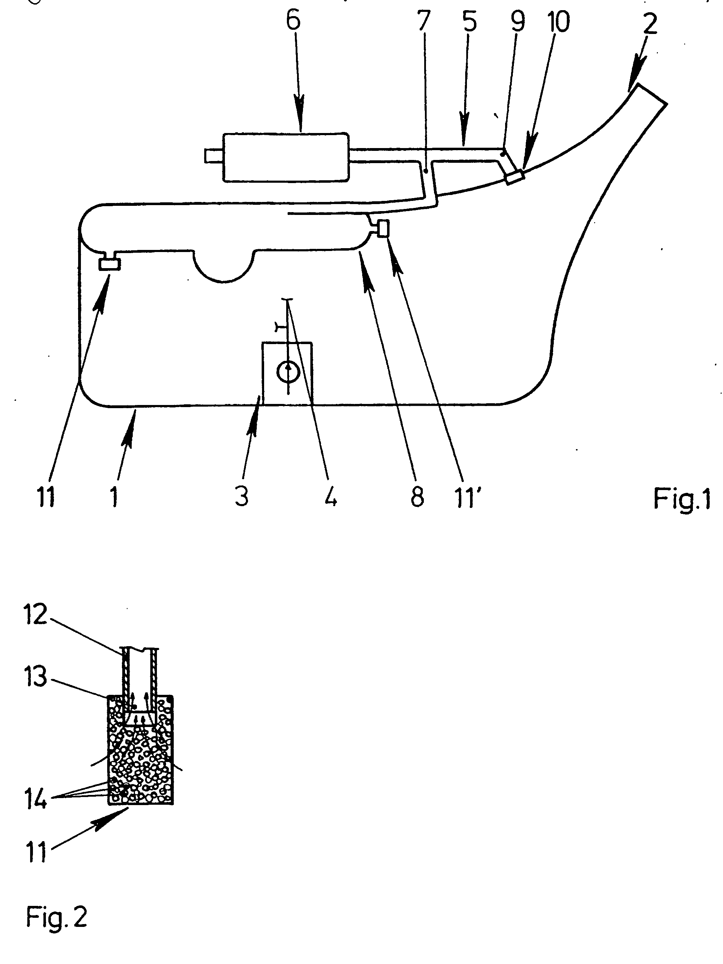

Figur 1 zeigt einen Kraftstoffbehälter 1 mit einem Einfüllstutzen 2 zum Einfüllen von Kraftstoff. In dem Kraftstoffbehälter 1 ist eine Kraftstofffördereinheit 3 angeordnet, welche Kraftstoff über eine Vorlaufleitung 4 zu einer nicht dargestellten Brennkraftmaschine eines Kraftfahrzeuges fördert. Der Kraftstoffbehälter 1 hat eine Entlüftungseinrichtung 5 mit einem außerhalb des Kraftstoffbehälters 1 angeordneten Aktivkohlefilter 6. Von dem Aktivkohlefilter 6 führt eine Entlüftungsleitung 7 zu einem innerhalb des Kraftstoffbehälters 1 angeordneten Sammelbehälter 8 und eine weitere Entlüftungsleitung 9 zu einem im oberen Bereich in der Wandung des Kraftstoffbehälters 1 angeordneten Schwallschutzelement 10. Der Sammelbehälter 8 hat über zwei weitere Schwallschutzelemente 11, 11' Verbindungen mit den übrigen Bereichen des Kraftstoffbehälters 1.

Über die Entlüftungseinrichtung 5 wird ein Entweichen von Gasen beim Betanken des Kraftstoffbehälters 1 oder bei einer Erwärmung des Kraftstoffs über den Aktivkohlefilter 6 ermöglicht. Weiterhin ermöglicht die Entlüftungseinrichtung 5 ein Einströmen von Luft aus der Umgebung in den Kraftstoffbehälter 1 beim Verbrauch von Kraftstoff. Die Schwallschutzelemente 10, 11, 11' verhindern ein Eindringen von innerhalb des Kraftstoffbehälters 1 umherschwappendem Kraftstoff in die außerhalb des Kraftstoffbehälters 1 angeordneten Entlüftungsleitungen 7, 9 und damit in den Aktivkohlefilter 6.

Figur 2 zeigt stark vergrößert eines der an dem Sammelbehälter 8 aus Figur 1 angeordneten Schwallschutzelemente 11. Hierbei ist zu erkennen, daß das Schwallschutzelement 11 zylinderförmig gestaltet und auf einem Anschlußstutzen 12 des Sammelbehälters 8 befestigt ist. Der Anschlußstutzen 12 hat an seinem freien Ende eine Ausgleichsöffnung 13 die von dem Schwallschutzelement 11 abgedeckt wird. Das Schwallschutzelement 11 weist eine Vielzahl miteinander verpreßter Kunststoffkörner 14 auf. Die Kunststoffkörner 14 begrenzen zur Durchströmung mit Kraftstoffdämpfen und Luft vorgesehene Kanäle. Zur Verdeutlichung sind die Luftströmungen durch einige der Kanäle mit Pfeilen gekennzeichnet. Das Schwallschutzelement 11 umschließt das freie Ende des Anschlußstutzens 12 und ist mit diesem verschweißt.

## Patentansprüche

1. Entlüftungseinrichtung für einen Kraftstoffbehälter (1) mit einer im Kraftstoffbehälter (1) anzuordnenden Ausgleichsöffnung (13) für einen Druckausgleich des Kraftstoffbehälters (1) mit der Umgebung und mit einem vor der Ausgleichsöffnung (13) angeordneten Schwallschutzelement (11, 11'), wobei das Schwallschutzelement (11, 11') als feststehendes Bauteil mit einer Vielzahl von einzelnen, im Verhältnis zu der Ausgleichsöffnung (13) jeweils einen kleinen Durchmesser aufweisenden, zur Durchströmung mit Kraftstoffdämpfen und Luft begrenzten Kanälen gestaltet ist, **dadurch gekennzeichnet, dass** das Schwallschutzelement (11, 11') eine die Ausgleichsöffnung (13) aufweisende Leitung im Bereich der Ausgleichsöffnung (13) teilweise umschließt.

2. Entlüftungseinrichtung nach Anspruch 1, **dadurch gekennzeichnet, dass** das Schwallschutzelement (10, 11, 11') als poröses Sinterteil gestaltet ist.

3. Entlüftungseinrichtung nach Anspruch 1 oder 2, **dadurch gekennzeichnet, dass** das Schwallschutzelement (10, 11, 11') aus Kunststoff gefertigt ist.

4. Entlüftungseinrichtung nach zumindest einem der vorhergehenden Ansprüche, **dadurch gekennzeichnet, dass** das Schwallschutzelement (10, 11, 11') mit dem die Ausgleichsöffnung (13, 16) aufweisenden Bauteil verschweißt oder verklipst ist.

## Claims

1. Ventilation device for a fuel tank (1), having an equalizing opening (13) which is to be arranged in the fuel tank (1) and is intended for equalizing the pressure of the fuel tank (1) with the surroundings, and having an antisurge element (11, 11') arranged in front of the equalizing opening (13), wherein the antisurge element (11, 11') is designed as a fixed component having a multiplicity of individual channels each having a small diameter in comparison to the equalizing opening (13) and being delimited for fuel vapours and air to flow through, **characterized in that** the antisurge element (11, 11') partially surrounds, in the region of the equalizing opening (13), a line which has the equalizing opening (13).

2. Ventilation device according to Claim 1, **characterized in that** the antisurge element (10, 11, 11') is designed as a porous sintered part.

3. Ventilation device according to Claim 1 or 2, **characterized in that** the antisurge element (10, 11, 11') is manufactured from plastic.

4. Ventilation device according to at least one of the preceding claims, **characterized in that** the antisurge element (10, 11, 11') is welded or clipped to the component having the equalizing opening (13, 16).

## Revendications

1. Système d'évacuation d'air pour un réservoir à carburant (1), comportant une ouverture de compensation (13) à ménager dans le réservoir à carburant (1) pour permettre une compensation de la pression entre le réservoir à carburant (1) et l'environnement et un élément (11, 11') de protection contre les projections de liquide disposé devant l'ouverture de compensation (13), où l'élément (11, 11') de protection contre les projections de liquide est conçu comme pièce fixe comportant une pluralité de canaux individuels ayant chacun, par rapport à l'ouverture de compensation (13), un petit diamètre et prévus pour être traversés uniquement par les vapeurs de carburant et par l'air, **caractérisé par le fait que** l'élément (11, 11') de protection contre les projections de liquide enveloppe partiellement, dans la zone de l'ouverture de compensation (13), une conduite comportant l'ouverture de compensation (13).

2. Système d'évacuation d'air selon la revendication 1 **caractérisé par le fait que** l'élément (10, 11, 11') de protection contre les projections de liquide est conçu comme pièce poreuse frittée.

3. Système d'évacuation d'air selon la revendication 1 ou 2 **caractérisé par le fait que** l'élément (10, 11, 11') de protection contre les projections de liquide est fabriqué en matière plastique.

4. Système d'évacuation d'air selon au moins l'une des revendications précédentes **caractérisé par le fait que** l'élément (10, 11, 11') de protection contre les projections de liquide est soudé ou agrafé au composant comportant l'ouverture de compensation (13, 16).
